# EUROPEAN PATENT APPLICATION

(11) **EP 4 759 170 A1**
(43) Date of publication of application: **17.06.2026**
(21) Application number: 24852166.8
(22) Date of filing: 30.07.2024
(51) Int. Cl.: A24F 40/95, A24F 40/40, A24F 40/42, A24F 40/46, A24F 40/53, A24F 40/57, A24F 40/50

(54) **AEROSOL GENERATING DEVICE**

(30) Priority: 09.08.2023 KR 20230104352; 16.10.2023 KR 20230137986
(71) Applicant: KT&G Corporation, Daedeok-gu Daejeon 34337 (KR)
(72) Inventor: JANG, Chul Ho, Bucheon-si, Gyeonggi-do 14725 (KR); KIM, Jae Hyuk, Seoul 06352 (KR); PARK, Sang Cheol, Suwon-si, Gyeonggi-do 16469 (KR); SEO, Jang Won, Daejeon 34023 (KR); WOO, Young Min, Hwaseong-si, Gyeonggi-do 18391 (KR); LEE, Won Kyeong, Guri-si, Gyeonggi-do 11920 (KR); JUNG, Jin Chul, Daejeon 34079 (KR); HAN, Dae Nam, Seoul 06331 (KR)
(74) Representative: Ter Meer Steinmeister & Partner
(86) International application number: PCT/KR2024/011102
(87) International publication number: WO 2025/033810

(57) **Abstract**

An aerosol generating device includes a body including an accommodation space for accommodating an aerosol generating article, a heater for heating the aerosol generating article accommodated in the accommodation space, a plurality of batteries which are detachably coupled to the body and include a supply terminal for supplying power to the interior of the body, and a plurality of receiving terminals for receiving power by contacting the supply terminal in different directions, wherein the body includes a first extension portion and a second extension portion extending in a first direction while facing each other, a first base portion extending in a second direction crossing the first direction so as to cross the first extension portion and the second extension portion, and a second base portion protruding from the first base portion in the first direction so as to be connected to the second extension portion, and having the plurality of receiving terminals arranged therein.

## Description

### Technical Field

Various embodiments of the present disclosure relate to an aerosol generating device, and more particularly, to an aerosol generating device capable of accommodating a plurality of detachable batteries.

### Background Art

Recently, the demand for alternative methods for overcoming the shortcomings of general cigarettes has increased. For example, there is an increasing demand for a system for generating aerosols by heating a cigarette or an aerosol-generating material by using an aerosol-generating device, rather than by burning cigarettes. Accordingly, research on heating-type aerosol-generating devices has been actively conducted.

As interest in environmental issues increases worldwide, environmental friendliness and safety are demanded throughout the entire life cycle of batteries, from production to recycling. Accordingly, in the field of aerosol-generating devices, research on detachable batteries has been newly conducted while promoting the development of related technologies, such as reuse and recycling of batteries.

### Disclosure of Invention

### Technical Problem

Embodiments provide an aerosol generating device capable of accommodating a plurality of detachable batteries.

Additionally, embodiments provide an aerosol generating device having a structure in which an overheated battery is separable without separate manipulation by a user.

The technical problems of the present disclosure are not limited to the above-described description, and other technical problems may be clearly understood by one of ordinary skill in the art from the embodiments to be described hereinafter.

### Solution to Problem

An aerosol generating device according to an embodiment may include a body including an accommodation space for accommodating an aerosol generating article, a heater for heating the aerosol generating article accommodated in the accommodation space, a plurality of batteries which are detachably coupled to the body and include a supply terminal for supplying power to the interior of the body, and a plurality of receiving terminals for receiving power by contacting the supply terminal in different directions, wherein the body includes a first extension portion and a second extension portion extending in a first direction while facing each other, a first base portion extending in a second direction crossing the first direction so as to cross the first extension portion and the second extension portion, and a second base portion protruding from the first base portion in the first direction so as to be connected to the second extension portion, and having the plurality of receiving terminals arranged therein.

### Advantageous Effects of Invention

According to an aerosol generating device according to embodiments, sufficient power may be supplied to internal components of the aerosol generating device.

In addition, according to the aerosol generating device according to the embodiments, problems that may occur due to overheating of a battery may be prevented in advance, and thus the aerosol generating device may be used safely.

Effects of the present disclosure are not limited to the above effects, and effects that are not mentioned could be clearly understood by one of ordinary skill in the art from the present specification and the attached drawings.

### Brief Description of Drawings

FIGS. 1A to 1C are diagrams illustrating examples of an aerosol generating device according to an embodiment.
FIG. 2 is a perspective view schematically illustrating an aerosol generating device according to an embodiment of the present disclosure.
FIG. 3A is a perspective view illustrating a first state in which a body, a battery, and a cap that are applicable to the aerosol generating device of FIG. 2 are separated from each other.
FIG. 3B is a cross-sectional view illustrating a second state in which the body, the battery, and the cap of FIG. 3A are coupled to each other.
FIG. 4A is a perspective view illustrating a first state in which a battery is separated from a first area of a body applicable to an aerosol generating device according to another embodiment.
FIG. 4B is a cross-sectional view illustrating the first state in which the body and the battery and a cap of FIG. 4A are separated from each other.
FIG. 4C is a cross-sectional view illustrating a second state in which the body and the battery and the cap of FIG. 4A are coupled to each other.
FIGS. 5A to 5C are cross-sectional views sequentially illustrating a process in which a battery is separated due to overheating of the battery in an aerosol generating device according to another embodiment.
FIGS. 6A and 6B are cross-sectional views sequentially illustrating a process of separating a battery according to a user's operation in the aerosol generating device of FIG. 6A.
FIG. 7 is a block diagram of an aerosol generating device according to another embodiment of the present disclosure.

### Mode for the Invention

Hereinafter, embodiments will be described in detail with reference to the accompanying drawings, and the same or similar components will be assigned the same reference numerals regardless of the reference numerals in the drawings, and the same descriptions thereof will be omitted.

Terms such as "...unit" and "... module," are used in the following description in consideration of only ease of drafting of the specification, and thus do not have distinct meanings or roles in themselves.

In the description of embodiments of the disclosure, certain detailed explanations of the related art are omitted when it is deemed that they may unnecessarily obscure the essences of embodiments of the disclosure. In addition, the accompanying drawings are only intended to facilitate understanding of the embodiments described herein, and the spirit of the disclosure is not limited by the accompanying drawings and should be understood to include all changes, equivalents or alternatives included in the spirit and scope of the disclosure.

While such terms as "first", "second", etc., may be used to describe various components, such components must not be limited to the above terms. The above terms are used only to distinguish one component from another.

When an element is referred to as being "connected to" or "coupled to" another element, it may be directly connected or coupled to the other element or intervening elements may be present. In contrast, when an element is referred to as being "directly connected to" or "directly coupled to" another element, there are no intervening elements present.

An expression used in the singular encompasses the expression of the plural, unless it has a clearly different meaning in the context.

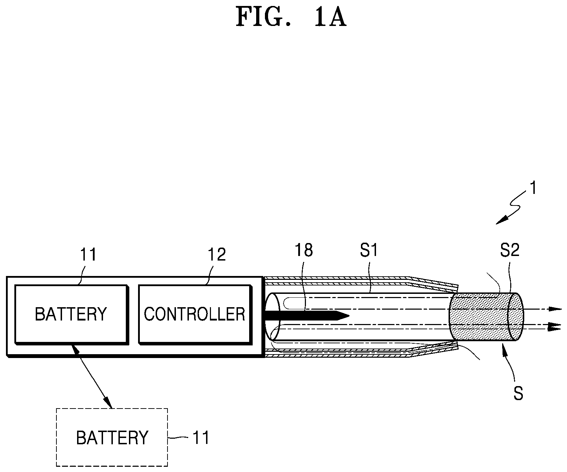

FIGS. 1A to 1C are diagrams showing examples of an aerosol-generating device according to an embodiment.

FIGS. 1A to 1C illustrate examples in which a cigarette (hereinafter, an "aerosol generating article" or a "stick" may be used interchangeably with the term) is inserted into an aerosol generating device.

Referring to FIGS. 1A to 1C, an aerosol generating device 1 may include a battery 11, a controller 12, a heater 18, and a cartridge 19.

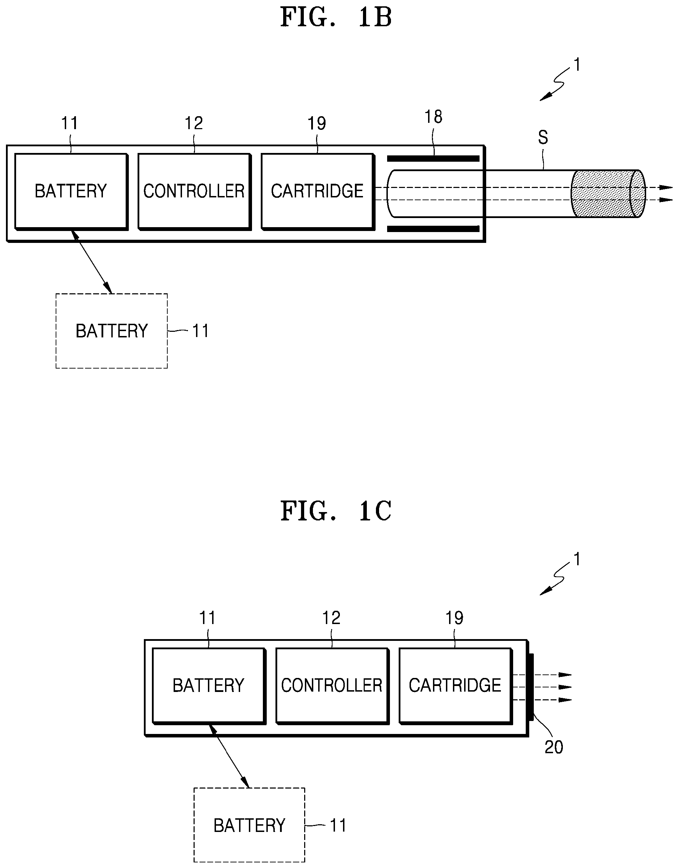

Referring to FIG. 1A, the aerosol generating device 1 includes the battery 11, the controller 12, and the heater 18. Referring to FIG. 1B, the aerosol generating device 1 further includes the cartridge 19. An aerosol generating article S can be inserted into the internal space of the aerosol generating device 1.

When the aerosol generating article S is inserted into the aerosol generating device 1, the aerosol generating device 1 may generate an aerosol by operating the heater 18 and/or the cartridge 19. An aerosol generated by the heater 18 and/or the cartridge 19 passes through the aerosol generating article S and is delivered to a user. As an occasion demands, the aerosol generating device 1 may heat the heater 18 even when the aerosol generating article S is not inserted into the aerosol generating device 1.

Meanwhile, the heater 18 may be omitted. Referring to FIG. 1C, the aerosol generating device 1 includes the battery 11, the controller 12, and the cartridge 19. The aerosol generating device 1 of FIG. 1C has no internal space into which the aerosol generating article S may be inserted, and the heater 18 for heating the aerosol generating article S is not provided.

FIGS. 1A to 1C illustrate components of the aerosol generating device 1, which are related to the present embodiment. Accordingly, it will be understood by one of ordinary skill in the art pertaining to the present embodiment that other general-purpose elements may be further included in the aerosol generating device 1 in addition to the elements illustrated in FIGS. 1A to 1C.

FIGS. 1A to 1C illustrate that components are arranged in a row in the aerosol generating device 1. However, the internal structure of the aerosol generating device 1 is not limited to those illustrated in FIGS. 1A to 1C. For example, the cartridge 19 and the heater 18 may be arranged in parallel. In other words, depending on the design of the aerosol generating device 1, the arrangement of the battery 11, the controller 12, the heater 18, and the cartridge 19 may be changed.

The battery 11 supplies electric power used for the aerosol generating device 1 to operate. For example, the battery 11 may supply power for heating the heater 18 or the cartridge 19 and supply power for operating the controller 12. In addition, the battery 11 may supply power for operating a display, a sensor, a motor, and the like installed in the aerosol generating device 1.

The battery 11 may be a removable type (detachable) power source. The battery 11 is provided with an electrical contact, and, when the battery 11 is mounted in the aerosol generating device 1, the electrical contact of the battery 11 may be implemented to be electrically connected to an electrical contact provided in the aerosol generating device 1 to supply power to the aerosol generating device 1. According to another embodiment, the battery 11 may be provided with a charging coil for supplying power to the aerosol generating device 1 in a wireless charging manner, instead of a separate electrical contact. In other words, the power supply method of the battery 11 may vary, and the electrical connection method of the battery 11 and the aerosol generating device 1 may vary depending on the power supply method supported by the battery 11.

The detachable battery 11 may be provided with a charger interface that may be connected to an external charger. Power for charging the detachable battery 11 may be provided to the battery 11 via the charger interface. The battery 11 may be charged by an external charger while connected to the aerosol generating device 1 or while separated from the aerosol generating device 1.

The controller 12 controls the overall operation of the aerosol generating device 1. In detail, the controller 12 controls the operation of the battery 11, heater 18, and cartridge 19 as well as other components included in the aerosol generating device 1. The controller 12 may also check the status of each of the components of the aerosol generating device 1 and determine whether the aerosol generating device 1 is in an operable state.

The controller 12 includes at least one processor. A processor can be implemented as an array of a plurality of logic gates or can be implemented as a combination of a general-purpose microprocessor and a memory in which a program executable in the microprocessor is stored. Also, it may be understood by one of ordinary skill in the art that the processor may be implemented as other types of hardware.

The heater 18 may be heated by power supplied from the battery 11. For example, when a cigarette is inserted into the aerosol generating device 1, the heater 18 may be located outside the cigarette. Therefore, the heated heater 18 may raise the temperature of an aerosol generating material in the cigarette.

The heater 18 may be an electro-resistive heater. For example, the heater 18 includes an electrically conductive track, and the heater 18 may be heated as a current flows through the electrically conductive track. However, the heater 18 is not limited to the above-stated example, and may be used without limitation as long as theater 18 may be heated to a desired temperature. Here, the desired temperature may be pre-set in the aerosol generating device 1 or may be set to a desired temperature by a user.

Meanwhile, according to another embodiment, the heater 18 may be an induction heating heater. In detail, the aerosol generating device 1 may include an induction coil (not shown) surrounding the heater 18. When power is supplied to the induction coil by the battery 11, the induction coil may heat the heater 18. The heater 18 is a susceptor, and the heater 18 may be heated by a magnetic field generated by an AC current flowing through the induction coil. The magnetic field may penetrate through the heater 18 and generate eddy currents within the heater 18. A current may generate heat in the heater 18.

Meanwhile, a cigarette may include a susceptor that may be heated by an induction heater. A susceptor may be included inside the cigarette, and the susceptor inside the cigarette may be heated by a magnetic field generated by an AC current flowing through the induction coil.

Although FIGS. 1A and 1B show that the heater 18 is positioned outside the aerosol generating article S, but the present disclosure is not limited thereto. The heater 18 may include a tubular heating element, a plate-shaped heating element, a needle-shaped heating element, or a rod-shaped heating element and may heat the inside or the outside of the aerosol generating article S depending on the shape of a heating element.

Also, a plurality of heaters 18 may be arranged in the aerosol generating device 1. At this time, the plurality of heaters 18 may be arranged to be inserted into the interior of the aerosol generating article S or may be arranged outside the aerosol generating article S. Also, some of the plurality of heaters 18 may be arranged to be inserted into the interior of the aerosol generating article S, and the remaining of the plurality of heaters 18 may be arranged outside the aerosol generating article S. Also, the shape of the heater 18 is not limited to shapes shown in FIGS. 1A and 1B, and may be manufactured in various shapes.

The cartridge 19 may heat a liquid composition to generate an aerosol, and a generated aerosol may be delivered to a user through the aerosol generating article S.

In other words, an aerosol generated by the cartridge 19 may move along an airflow passage of the aerosol generating device 1. In FIG. 1A and FIG. 1B, an aerosol moved along the airflow passage may pass through the aerosol generating article S and be delivered to a user. In FIG. 1C, the aerosol moved along the airflow passage may be delivered to the user through a mouthpiece 20.

The cartridge 19 may include, but is not limited to, a liquid storage, a liquid delivery means, and a cartridge heater. For example, the liquid storage, the liquid delivery means, and the cartridge heater may be included in the aerosol generating device 1 as independent modules.

The liquid storage may store a liquid composition. For example, the liquid composition may be a liquid including a tobacco-containing material containing volatile tobacco flavor components or may be a liquid including a non-tobacco material. The liquid storage may be manufactured to be detachable from/attachable to the cartridge 19 or may be manufactured integrally with the cartridge 19.

For example, the liquid composition may include water, a solvent, ethanol, plant extracts, flavorings, flavoring agents, or a vitamin mixture. Flavorings may include, but are not limited to, menthol, peppermint oil, spearmint oil, and various fruit-flavored ingredients. The flavoring may include ingredients capable of providing a user with a variety of flavors. Vitamin mixtures can be a mixture of at least one of vitamin A, vitamin B, vitamin C, and vitamin E, but are not limited thereto. Also, the liquid composition may include an aerosol former such as glycerin and propylene glycol.

The liquid delivery means may deliver a liquid composition from the liquid storage to an element to be heated. For example, the liquid delivery element may be a wick such as cotton fiber, ceramic fiber, glass fiber, or porous ceramic, but is not limited thereto.

The cartridge heater is an element for heating a liquid composition delivered by a liquid delivery means. The cartridge heater may be, but is not limited to, a metal heating wire, a metal heating plate, A ceramic heater, etc. However, the present disclosure is not limited thereto, and the cartridge heater may include various methods of generating an aerosol from an aerosol generating material.

For example, the cartridge heater may include a conductive filament such as nichrome wire and may be positioned as being wound around the liquid delivery element. The cartridge heater may be heated by a current supply and may transfer heat to the liquid composition in contact with the cartridge heater, thereby heating the liquid composition. As a result, aerosol may be generated.

According to another embodiment, the cartridge heater may include a susceptor material that is heated by an induced magnetic field, and the cartridge heater may be heated by an induced magnetic field generated by an induction coil positioned separately from a heating element.

According to another embodiment, the cartridge heater may be an ultrasonic vibrator that generates an aerosol from an aerosol generating material by utilizing ultrasonic vibration. Ultrasonic vibration method may refer to a method of generating an aerosol by atomizing an aerosol generating material with ultrasonic vibration generated by a vibrator.

The cartridge heater may be disposed on a liquid delivery means, either permanently or reversibly attached to the liquid delivery means, such as by coating, spraying, depositing, plating, immersing, painting, printing, 3D printing, using a tool, or by bonding according to structural features, such as being wound around the liquid delivery means. Also, the cartridge heater may be placed in the liquid delivery means by, for example, sintering the cartridge heater together with the liquid delivery means during the process of manufacturing the liquid delivery means. However, the arrangement of the cartridge heater is not limited to the examples described above, and may include various methods in which the cartridge heater may be disposed in a liquid delivery means while maintaining its function.

The cartridge heater may also be referred to as a cartomizer or atomizer, but is not limited thereto.

The cartridge 19 may be inserted into and removed from the main body of the aerosol generating device 1 or the aerosol generating device 1. When the aerosol generating material stored in the cartridge 19 is completely consumed, the aerosol generating material may be newly replenished into the cartridge 19 or the cartridge 19 may be replaced with another cartridge 19 containing the aerosol generating material.

Meanwhile, the aerosol generating device 1 may further include general-purpose components in addition to the battery 11, the controller 12, the heater 18, and the cartridge 19. For example, the aerosol generating device 1 may include a display capable of outputting visual information and/or a motor for outputting tactile information. Also, the aerosol generating device 1 may include at least one sensor (a puff detection sensor, a temperature detection sensor, a cigarette insertion detection sensor, etc.). Also, the aerosol generating device 1 may be fabricated to have a structure in which the outside air may flow in or gases therein may flow out even in the state where the aerosol generating article S is inserted.

Although not illustrated in FIGS. 1A to 1C, the aerosol generating device 1 and an additional cradle may form together a system. For example, the cradle may be used to charge the battery 11 of the aerosol generating device 1. Alternatively, the heater 18 may be heated while the cradle and the aerosol generating device 1 are coupled to each other.

The aerosol generating article S may resemble a conventional combustible cigarette. For example, the aerosol generating article S may include a first portion S1 containing an aerosol generating material and a second portion S2 including a filter and the like. The first portion S1 may be referred to as a 'medium portion' hereinafter.

The second portion S2 of the aerosol generating article S may also contain an aerosol generating material. For example, an aerosol generating material made in the form of granules or capsules may be inserted into the second portion S2.

The entire first portion S1 may be inserted into the aerosol generating device 1, and the second portion S2 may be exposed to the outside. Alternatively, only a portion of the first portion S1 may be inserted into the aerosol generating device 1, or the entire first portion S1 and a portion of the second portion S2 may be inserted into the aerosol generating device 1. A user may inhale the aerosol while holding the second portion S2 by his/her lips. At this time, the aerosol is generated by as the outside air passes through the first portion S1, and the generated aerosol passes through the second portion S2 and is delivered to a user's mouth.

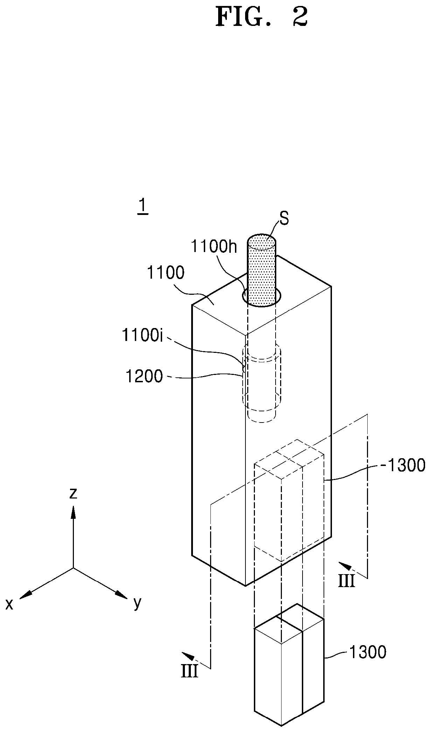

FIG. 2 is a perspective view schematically illustrating an aerosol generating device according to an embodiment of the present disclosure.

Referring to FIG. 2, an aerosol generating device 1 according to an embodiment may include a body 1100, a heater 1200, and a battery 1300.

The body 1100 forms the overall appearance of the aerosol generating device 1 and may include an internal space in which components of the aerosol generating device 1 may be arranged. Although the drawing only shows an embodiment in which the body 1100 has a cross-section of a square column shape, the shape of the body 1100 is not limited thereto, and the body 1100 may be formed in a cylindrical shape overall or in a polygonal column shape.

The body 1100 may include an opening 1100h through which an aerosol generating article S may be inserted into the interior of the body 1100. At least a portion of the aerosol generating article S may be inserted or accommodated inside the body 1100 through the opening 1100h.

The body 1100 may include an accommodation space 1100i for receiving the aerosol generating article S therein. The accommodation space 1100i may be formed in an upper portion of the body 1100. The accommodation space 1100i is opened upward and may be connected to the opening 1100h.

The accommodation space 1100i may have a cylindrical shape that extends vertically. At least a portion of the aerosol generating article S may be accommodated inside the body 1100 through the opening 1100h in the upper portion of the accommodation space 1100i. A depth of the accommodation space 1100i for accommodating the aerosol-generating article S may correspond to the length of an area including an aerosol generating material or medium in the aerosol generating article S.

The heater 1200 (e.g., the heater 18 of FIGS. 1A and 1B) may generate an aerosol from the aerosol generating article S accommodated in the accommodation space 1100i. The heater 1200 may extend vertically along the accommodation space 1100i.

According to an embodiment, the heater 1200 may surround at least a portion of the accommodation space 1100i. As an example, the heater 1200 may be a cylindrical electrical resistance heater surrounding at least a portion of the accommodation space 1100i. As another example, the heater 1200 may include a cylindrical susceptor surrounding at least a portion of the accommodation space 1100i and an induction coil surrounding the susceptor. The heater 1200 may heat the exterior of the aerosol generating article S accommodated in the accommodation space 1100i. However, the embodiment is not limited to the shape and arrangement of the heater 1200. In another embodiment, the heater may be inserted into the interior of the aerosol generating article S.

At least one area of the aerosol generating article S accommodated in the accommodation space 1100i may be heated by the heater 1200, and vaporized particles generated by heating the aerosol generating article S and air introduced into the internal space of the body 1100 through an air inlet (e.g., the opening 1100h) formed in one area of the body 1100 may be mixed with each other to thereby generate an aerosol.

Meanwhile, the heater 1200 may be the cartridge heater of FIG. 1B and FIG. 1C. In this case, the aerosol generating article S may be the cartridge 19 of FIGS. 1B and 1C rather than a cigarette or a stick.

The aerosol generating device 1 according to an embodiment may include a battery 1300 that supplies power to be used to operate the aerosol generating device 1. That is, the battery 1300 may supply power to components arranged inside the body 1100. The battery 1300 may be the battery 11 of FIGS. 1A to 1C.

The battery 1300 may include a polygonal columnar shape as shown in FIG. 2, but is not limited thereto and may include various shapes such as a cylindrical shape. Also, in FIG. 2, the battery is that is relatively short in an x-axis direction or a y-axis direction and relatively long in a z-axis direction is illustrated, but the specifications of the battery are not limited to the drawing.

Referring to FIG. 2, the battery 1300 may be detachably coupled to the body 1100. For example, the battery 1300 may be inserted into the body 1100 in a +z direction at a location spaced apart from the body 1100 in a -z direction and coupled to an area of the body 1100.

A plurality of batteries 1300 may be coupled to the body 1100. In FIG. 2, two batteries 1300 are inserted into the body 1100 are illustrated, but the embodiment is not limited to the number of batteries 1300.

A structure in which the plurality of batteries 1300 are detachably coupled to the body 1100 is described below.

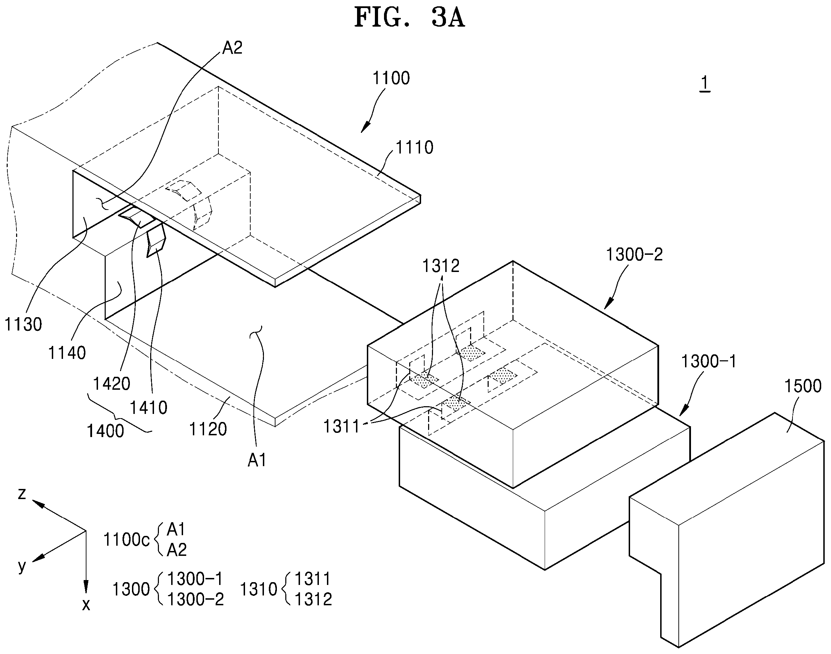

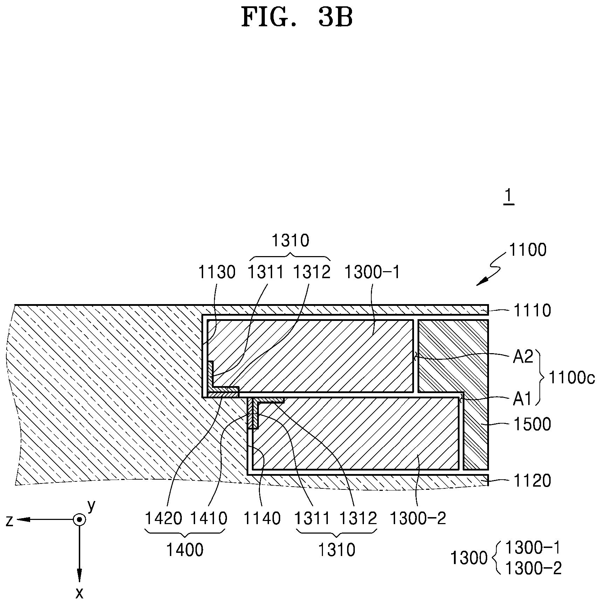

FIG. 3A is a perspective view illustrating a first state in which a body, a battery, and a cap that are applicable to the aerosol generating device of FIG. 2 are separated from each other. FIG. 3B is a cross-sectional view illustrating a second state in which the body and the battery and the cap of FIG. 3A are coupled to each other.

Referring to FIGS. 3A and 3B, the aerosol generating device 1 according to an embodiment may include the body 1100, the battery 1300, a receiving terminal 1400, and a cap 1500.

At least one of the components of the aerosol generating device 1 illustrated in FIGS. 3A and 3B may be identical or similar to at least one of the components of the aerosol generating device 1 of FIG. 2, and any redundant description will be omitted below.

The body 1100 may include a first extension portion 1110 and a second extension portion 1120 facing each other and extending in a first direction (e.g., the z-axis direction). The first extension portion 1110 may extend in the z-axis direction from one side of the body 1100, and the second extension portion 1120 may extend in the z-axis direction from the other side of the body 1100. The plurality of batteries 1300 may be inserted between the first extension portion 1110 and the second extension portion 1120.

The body 1100 may include a first base portion 1130 and a second base portion 1140 arranged between the first extension portion 1110 and the second extension portion 1120. The first base portion 1130 may extend in a second direction (e.g., the x-axis direction) that crosses the first direction. The second base portion 1140 may protrude in the first direction (e.g., the z-axis direction) from the first base portion 1130 to be connected to the second extension portion 1120.

The plurality of batteries 1300 inserted between the first extension portion 1110 and the second extension portion 1120 may be inserted into the body 1100 until they come into contact with the first base portion 1130 or the second base portion 1140.

A space surrounded by the first extension portion 1110, the second extension portion 1120, the first base portion 1130, and the second base portion 1140 may be expressed as a coupling space 1100c. The coupling space 1100c may refer to a space inside the body 1100 for coupling the battery 1300 to the body 1100. That is, the body 1100 may include the coupling space 1100c that accommodates the battery 1300.

The coupling space 1100c may include a shape corresponding to the shapes of the plurality of batteries 1300. For example, the coupling space 1100c may be formed to be relatively short in the x-axis direction or the y-axis direction and relatively long in the z-axis direction. The plurality of batteries 1300 may be inserted between the first extension portion 1110 and the second extension portion 1120 to close the coupling space 1100c.

The coupling space 1100c may include a first area A1 located in the first direction (e.g., z-axis direction) from the second base portion 1140 and a second area A2 located in the first direction from the first base portion 1130. As the second base portion 1140 protrudes in the first direction from the first base portion 1130, the first area A1 may be smaller than the second area A2 by a size of the second base portion 1140. Considering the structure in which the first area A1 and the second area A2 are arranged in parallel, the plurality of batteries 1300 may be arranged in parallel in the second direction (e.g., the x-axis direction).

The battery 1300 may include a supply terminal 1310, which is a portion for supplying power to the interior of the body 1100. The supply terminal 1310 may contact the receiving terminal 1400 arranged in a portion of the body 1100 and supply power to the receiving terminal 1400.

The receiving terminal 1400 is a component to receive power from the battery 1300. As the supply terminal 1310 and the receiving terminal 1400 contact each other, the receiving terminal 1400 may receive power from the supply terminal 1310. Accordingly, power may be supplied from the battery 1300 to the components arranged inside the body 1100.

A plurality of receiving terminals 1400 may be arranged. In FIGS. 3A and 3B, four receiving terminals 1400 are arranged, but the embodiment is not limited to the number of receiving terminals 1400. The plurality of receiving terminals 1400 may be arranged in different directions. For example, one of the plurality of receiving terminals 1400 may be arranged to face the first direction (e.g., the z-axis direction). Another one of the plurality of receiving terminals 1400 may be arranged to face the second direction (e.g., the x-axis direction).

Here, 'a direction in which the receiving terminal 1400 is arranged' or 'a direction in which the receiving terminal 1400 faces' may refer to a direction in which the receiving terminal 1400 faces the battery 1300 when the receiving terminal 1400 is in contact with the battery 1300.

The plurality of receiving terminals 1400 arranged to face different directions may be arranged on the second base portion 1140 of the body 1100. Specifically, the plurality of receiving terminals 1400 may include a first receiving terminal 1410 protruding in the first direction (e.g., the z-axis direction) from a bottom surface of the second base portion 1140 and a second receiving terminal 1420 protruding in the second direction (e.g., the x-axis direction) from a side surface of the second base portion 1140.

In FIGS. 3A and 3B, two first receiving terminals 1410 are arranged and two second receiving terminals 1420 are arranged, but the embodiment is not limited to the number of first receiving terminals 1410 and second receiving terminals 1420.

Referring to FIG. 3A, a first state in which the body 1100 and the battery 1300 are separated from each other is illustrated. In the first state, the receiving terminal 1400 protrudes and does not contact the battery 1300. The protruding shape of the receiving terminal 1400 of FIG. 3A may be referred to as a first shape of the receiving terminal 1400.

Referring to FIG. 3B, a second state in which the battery 1300 is coupled to the body 1100 is illustrated. In the second state, the receiving terminal 1400 is in contact with the battery 1300 and is pressed by the battery 1300 to become flat. The flattened shape of the receiving terminal 1400 of FIG. 3B may be referred to as a second shape of the receiving terminal 1400. The shape of the receiving terminal 1400 may vary between the first shape of FIG. 3A and the second shape of FIG. 3B.

The supply terminal 1310 in contact with the receiving terminal 1400 may include a first portion 1311 arranged to face the first direction (e.g., z-axis direction) and a second portion 1312 arranged to face the second direction (e.g., x-axis direction).

Each of the first portion 1311 and the second portion 1312 may be in contact with one receiving terminal 1400 facing the same direction as the direction in which each of the first portion 1311 and the second portion 1312 is facing. For example, the first portion 1311 of the supply terminal 1310 may be in contact with the first receiving terminal 1410 facing the z-axis direction. The second portion 1312 of the supply terminal 1310 may be in contact with the second receiving terminal 1420 facing the x-axis direction.

The first portion 1311 and the second portion 1312 may intersect each other at one edge of the battery 1300. When the first portion 1311 and the second portion 1312 meet and are connected to each other, the first portion 1311 and the second portion 1312 may form one supply terminal 1310. Accordingly, the supply terminal 1310 may include an 'L' shape.

Meanwhile, the plurality of batteries 1300 inserted into the body 1100 may be identical to each other. For example, a first battery 1300-1 inserted into the first area A1 and in contact with the bottom surface of the second base portion 1140 may be identical to a second battery 1300-2 inserted into the second area A2 and in contact with the side surface of the second base portion 1140 or a bottom surface of the first base portion 1130.

However, one battery 1300 may only come into contact with the receiving terminal 1400 that is arranged in a certain direction. For example, the first battery 1300-1 may contact the first receiving terminal 1410 through the first portion 1311. This is because the first portion 1311 and the first receiving terminal 1410 are arranged to face each other and face the +z direction and the -z direction, respectively. However, the first battery 1300-1 cannot contact the second receiving terminal 1420 through the second portion 1312. This is because the second portion 1312 and the second receiving terminal 1420 are arranged on the same surface or parallel to each other, so that both are arranged to face the -x direction.

The second battery 1300-2 may contact the second receiving terminal 1420 through the second portion 1312. This is because the second portion 1312 and the second receiving terminal 1420 are positioned to face each other and face the +x direction and the -x direction, respectively. However, the second battery 1300-2 cannot contact the first receiving terminal 1410 through the first portion 1311. This is because the first portion 1311 and the first receiving terminal 1410 are arranged so as not to face each other but to face in opposite directions.

These features of the battery 1300 coupled to the body 1100 are due to the structure of the second base portion 1140 protruding from the first base portion 1130 and the fact that the first receiving terminal 1410 and the second receiving terminal 1420 are respectively arranged on the bottom surface and the side surface of the second base portion 1140. Due to this structure, the second battery 1300-2 is to be inserted into the body 1100 while being rotated 180 degrees about the z-axis with respect to the first battery 1300-1.

The cap 1500 is a component for closing the coupling space 1100c by coupling one ends of the first extension portion 1110 and the second extension portion 1120 to prevent the battery 1300 from being separated from the coupling space 1100c. However, due to the structure of the second base portion 1140 protruding from the first base portion 1130 described above, the cap 1500 also needs to have a corresponding shape.

In detail, the first battery 1300-1 inserted into the first area A1 may extend in the first direction (e.g., the z-axis direction) from the bottom surface of the second base portion 1140, and the second battery 1300-2 inserted into the second area A2 may extend in the first direction (e.g., the z-axis direction) from the bottom surface of the first base portion 1130.

Accordingly, when two batteries 1300 are inserted into the coupling space 1100c, the first battery 1300-1 may protrude as much as the second base portion 1140 protrudes from the first base portion 1130 compared to the second battery 1300-2. Considering the structure in which one of the two batteries 1300 protrudes from the first area A1 in the first direction, the cap 1500 may include a structure that protrudes toward the second area A2.

According to the structure of the cap 1500, the coupling space 1100c into which the battery 1300 and the cap 1500 are inserted may be filled so that the battery 1300 inserted therein does not move, and the battery 1300 may be supported, without moving, by the cap 1500.

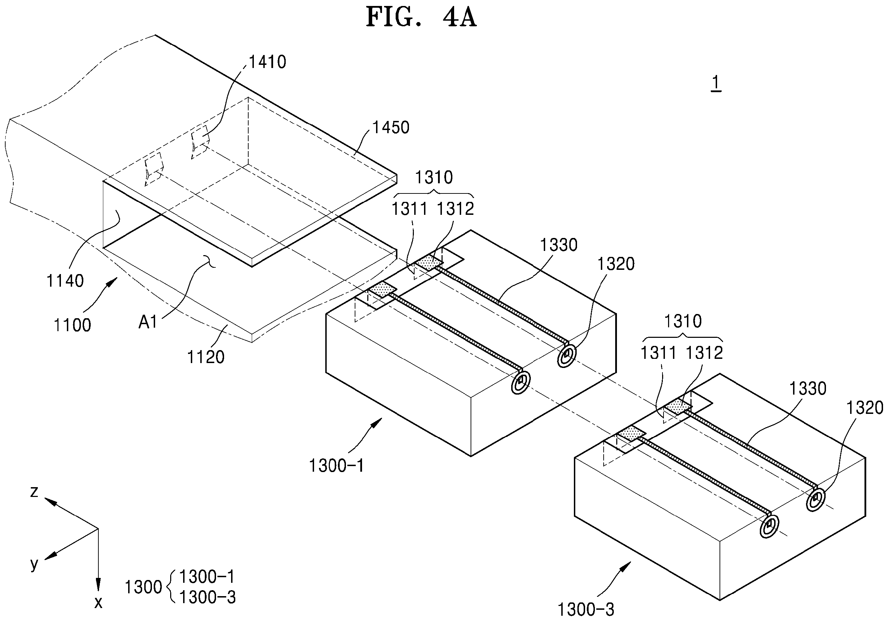

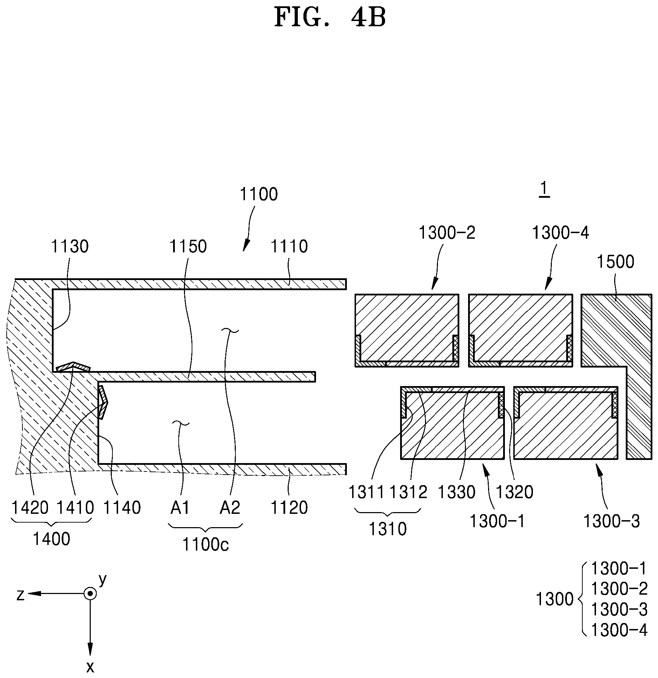

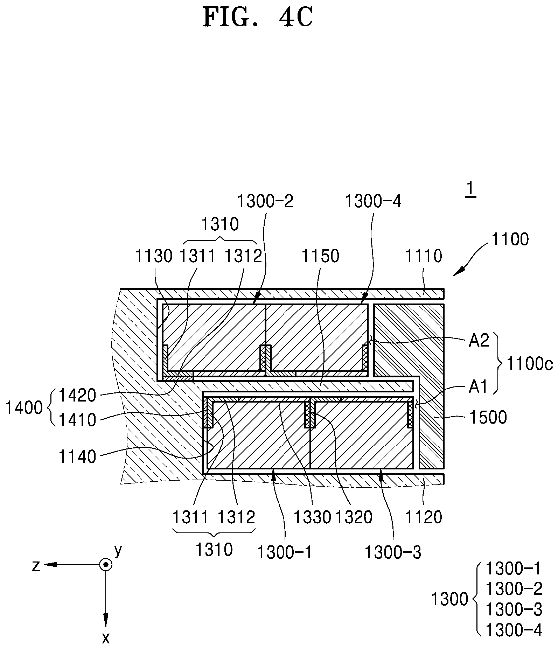

FIG. 4A is a perspective view illustrating a first state in which a battery is separated from a first area of a body applicable to an aerosol generating device according to another embodiment. FIG. 4B is a cross-sectional view illustrating the first state in which the body and the battery and a cap of FIG. 4A are separated from each other. FIG. 4C is a cross-sectional view illustrating a second state in which the body and the battery and the cap of FIG. 4A are coupled to each other.

Referring to FIGS. 4A to 4C, the aerosol generating device 1 according to another embodiment may include the body 1100, the battery 1300, the receiving terminal 1400, and the cap 1500.

At least one of the components of the aerosol generating device 1 illustrated in FIGS. 4A to 4C may be identical or similar to at least one of the components of the aerosol generating device 1 illustrated in FIGS. 3A and 3B, and any redundant description will be omitted below.

The body 1100 may include a partition 1150 separating the first area A1 and the second area A2 from each other. The partition 1150 is a component that extends from the bottom surface of the second base portion 1140 in the first direction (e.g., the z-axis direction) so as to physically block the first area A1 and the second area A2. Accordingly, the coupling space 1100c may be spatially separated into the first area A1 surrounded by the second extension portion 1120, the second base portion 1140, and the partition 1150, and the second area A2 surrounded by the first extension portion 1110, the first base portion 1130, and the partition 1150.

Referring to FIG. 4A, the first state is illustrated, in which the battery 1300 is separated from the first area A1 of the coupling space 1100c. The battery 1300 illustrated in FIG. 4A may include the supply terminal 1310 as well as a connection terminal 1320 and an extension terminal 1330.

The connection terminal 1320 may face in the opposite direction to the first portion 1311 of the supply terminal 1310 of one of the plurality of batteries 1300 (e.g., the first battery 1300-1) and be in contact with the first portion 1311 of another one of the plurality of batteries 1300 (e.g., a third battery 1300-3). The extension terminal 1330 may connect the supply terminal 1310 and the connection terminal 1320 to each other, of one of the plurality of batteries 1300 (e.g., the first battery 1300-1).

As the connection terminal 1320 of the first battery 1300-1 is in contact with the first portion 1311 of the supply terminal 1310 of the third battery 1300-3, power may be supplied from the supply terminal 1310 of the third battery 1300-3.

The extension terminal 1330 may extend in the first direction (e.g., the z-axis direction) while wrapping around an outer surface of a battery. When the supply terminal 1310 and the connection terminal 1320 of the first battery 1300-1 are connected to each other by the extension terminal 1330, the supply terminal 1310, the extension terminal 1330, and the connection terminal 1320 may form one terminal.

In the first area A1, the first battery 1300-1 and the third battery 1300-3 may be aligned in the first direction. Accordingly, the receiving terminal 1400 protruding from the second base portion 1140 may be aligned, in the first direction, with the first portion 1311 of the supply terminal 1310 and the connection terminal 1320 of each battery 1300.

Referring to FIG. 4B, the first state in which the body 1100 and the battery 1300 are separated from each other is illustrated. Not only may the first battery 1300-1 and the third battery 1300-3 be aligned in the first direction toward the first area A1, but the second battery 1300-2 and a fourth battery 1300-4 may be aligned in the first direction toward the second area A2.

As described above, considering the structure of the first base portion 1130 and the second base portion 1140 and the arrangement of the first receiving terminal 1410 and the second receiving terminal 1420, the second battery 1300-2 and the fourth battery 1300-4 are to be inserted into the body 1100 while being rotated 180 degrees about the z-axis with respect to the first battery 1300-1 and the third battery 1300-3.

Referring to FIG. 4C, the second state is illustrated, in which the battery 1300 is inserted into the coupling space 1100c of the body 1100. The first battery 1300-1 may be in contact with the first receiving terminal 1410 through the first portion 1311 of the supply terminal 1310. The second battery 1300-2 may be in contact with the second receiving terminal 1420 through the second portion 1312 of the supply terminal 1310. Additionally, the first battery 1300-1 may contact the first portion 1311 of the supply terminal 1310 of the third battery 1300-3 through the connection terminal 1320 connected to the extension terminal 1330. The second battery 1300-2 may contact the first portion 1311 of the supply terminal 1310 of the fourth battery 1300-4 through the connection terminal 1320 connected to the extension terminal 1330.

Here, since the partition 1150 physically separates the first area A1 and the second area A2 from each other, even if the extension terminal 1330 wraps around the outer surface of the battery 1300 and extends in the first direction, the extension terminal 1330 of the battery 1300 arranged in the first area A1 and the extension terminal 1330 of the battery 1300 arranged in the second area A2 cannot come into contact with each other. However, if the partition 1150 is not arranged according to the embodiment, the terminals of all four batteries may be connected to each other.

The cap 1500 may be arranged at an end of the body 1100 to prevent separation of the plurality of batteries 1300. In order for the cap 1500 to close, without any empty space, the coupling space 1100c into which the battery 1300 is inserted, taking into consideration the shape of the cap 1500, the length of the partition 1150 may extend shorter than the length by which the first extension portion 1110 and the second extension portion 1120 extend.

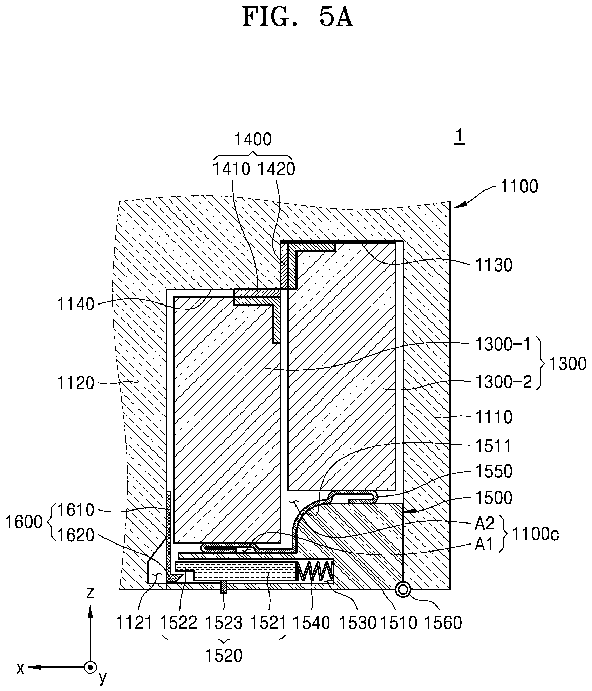

FIGS. 5A to 5C are cross-sectional views sequentially illustrating a process in which a battery is separated due to overheating of the battery in an aerosol generating device according to another embodiment.

Referring to FIGS. 5A to 5C, the aerosol generating device 1 according to another embodiment may include the body 1100, the battery 1300, the receiving terminal 1400, the cap 1500, and an engaging member 1600.

At least one of the components of the aerosol generating device 1 illustrated in FIGS. 5A to 5C may be identical or similar to at least one of the components of the aerosol generating device 1 illustrated in FIGS. 4A to 4C, and any redundant description will be omitted below.

FIG. 5A shows a state in which the plurality of batteries 1300 are inserted into the coupling space 1100c and the cap 1500 closes the coupling space 1100c.

Referring to FIG. 5A, a portion of the cap 1500 may be engaged by the engaging member 1600 and may not be separated from the body 1100. To explain the coupling between the cap 1500 and the engaging member 1600, the cap 1500 will first be described. The cap 1500 may include a housing 1510, a sliding member 1520, a rail 1530, a first elastic member 1540, a second elastic member 1550, and a rotational coupling member 1560.

The housing 1510 is a component that forms the overall appearance of the cap 1500. The housing 1510 may have the same or similar shape as the cap 1500 described above. According to an embodiment, a protruding portion of the housing 1510 protruding toward the second area A2 may include an inclined surface 1511 with respect to a direction facing the first area A1 (e.g., x-axis direction). The inclined surface 1511 may include a flat or curved surface. The inclined surface 1511 may prevent the housing 1510 from being engaged and opened by the first battery 1300-1 accommodated in the first area A1 when the cap 1500 is opened by rotating around one end of the first extension portion 1110.

The sliding member 1520 is a component that slides in one direction within the cap 1500. The rail 1530 is an internal space of the housing 1510, which guides the movement of the sliding member 1520 in one direction. The first elastic member 1540 is arranged on an inner portion of the rail 1530 and connected to the sliding member 1520.

Specifically, the sliding member 1520 may include a first portion 1521 connected to the first elastic member 1540, a second portion 1522 protruding in one direction (e.g., the x-axis direction) from the first portion 1521, and a third portion 1523 extending in a direction crossing one direction (e.g., the z-axis direction) from the first portion 1521, and protruding outward from the body 1100.

The second elastic member 1550 is arranged on an upper portion of the housing 1510 and supports the battery 1300. As illustrated, the second elastic member 1550 may include a shape extending along an outer surface of the upper portion of the housing 1510. When the battery 1300 is inserted into the coupling space 1100c and the cap 1500 closes the coupling space 1100c, the second elastic member 1550 may be compressed in the first direction (e.g., the z-axis direction). Accordingly, the second elastic member 1550 may pressurize the first battery 1300-1 and the second battery 1300-2 toward the receiving terminal 1400.

The rotational coupling member 1560 is a component that couples the housing 1510 to the first extension portion 1110 so that the housing 1510 may rotate about one end of the first extension portion 1110. For example, the rotational coupling member 1560 may include a hinge structure. By the rotational coupling member 1560, the cap 1500 may be coupled to a portion of the body 1100 even when the coupling space 1100c is open.

Meanwhile, the engaging member 1600 coupled to the cap 1500 may prevent separation of the cap 1500 from the body 1100, by contacting the second portion 1522 of the sliding member 1520, which is a portion of the cap 1500. Here, separation of the cap 1500 means that the cap 1500 opens the coupling space 1100c.

The engaging member 1600 may include an extension portion 1610 extending along the second extension portion 1120 and an engaging portion 1620 protruding from one end of the extension portion 1610 toward the cap 1500. An upper surface of the engaging portion 1620 may contact a lower surface of the second portion 1522. An end of the engaging portion 1620, which protrudes toward the cap 1500, may be inclined with respect to the first direction (e.g., z-axis direction) in which the battery is inserted.

Meanwhile, the engaging member 1600 may be formed of a shape memory alloy that changes its shape in response to temperature changes in the battery 1300. That is, as the temperature of the battery 1300 increases, heat is conducted from the battery 1300 to the engaging member 1600, and the engaging member 1600, temperature of which has increased, may change its shape.

Here, the second extension portion 1120 of the body 1100 may include an accommodation recess 1121 for accommodating the engaging member 1600, wherein a shape of the engaging member changes in a direction away from the sliding member 1520 in response to a temperature change of the battery 1300.

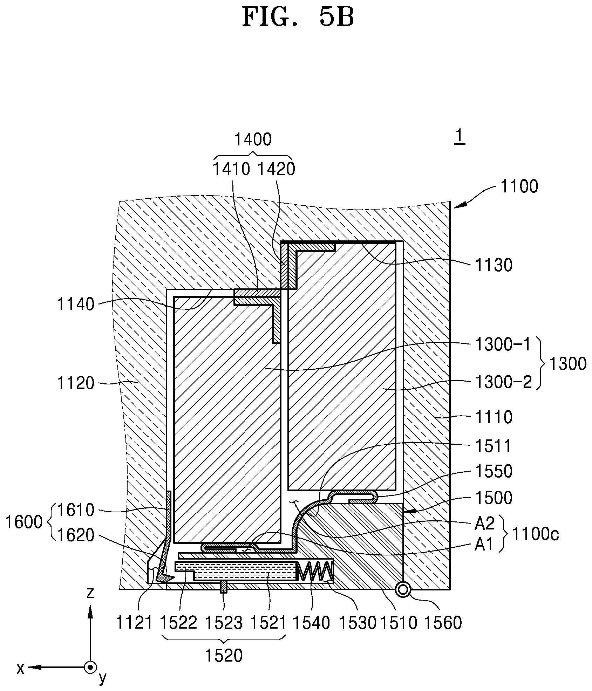

FIG. 5B shows the shape of the engaging member 1600 changing as the battery 1300 is overheated.

Referring to FIG. 5B, a portion of the extension portion 1610 of the engaging member 1600 is arranged between the second extension portion 1120 and the battery 1300, and thus is difficult to deform in the x-axis direction. However, the other portion of the extension portion 1610 and the engaging portion 1620 of the engaging member 1600 may be deformed to bend in the direction in which the accommodation recess 1121 is formed. Accordingly, the engaging portion 1620 accommodated in the accommodation recess 1121 may no longer come into contact with the second portion 1522 of the sliding member 1520.

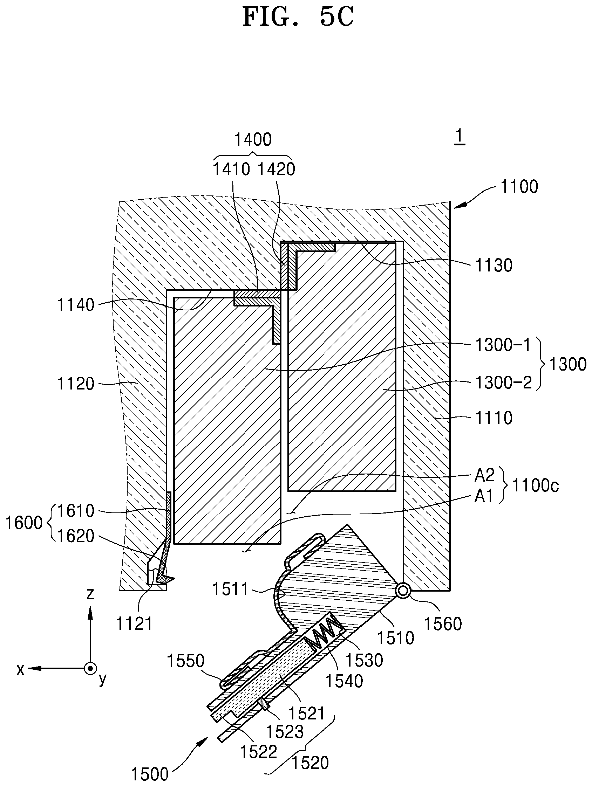

FIG. 5C shows a state in which the cap 1500 is rotated around one end of the first extension portion 1110 so that the coupling space 1100c is opened.

Referring to FIG. 5C, since the engaging member 1600 no longer supports a portion of the cap 1500, the cap 1500 may open the coupling space 1100c.

In a series of processes of FIGS. 5A to 5C, the support of the engaging member 1600 for the cap 1500 may be released due to overheating of the battery 1300 without a separate operation of a user with respect to the cap 1500, thereby opening the coupling space 1100c. Accordingly, the battery 1300 may be separated from the coupling space 1100c.

When the temperature of the engaging member 1600 is lowered, the engaging member 1600 may return to the shape of the engaging member 1600 illustrated in FIG. 5A. Here, when the user connects the cap 1500 to the engaging member 1600, the cap 1500 may be supported again by the engaging member 1600 that has restored its original shape, and the cap 1500 may close the coupling space 1100c without being separated from the coupling space 1100c.

Meanwhile, the battery 1300 is to be separable by user operation. A process of a user manipulating the cap 1500 to open the coupling space 1100c is described below.

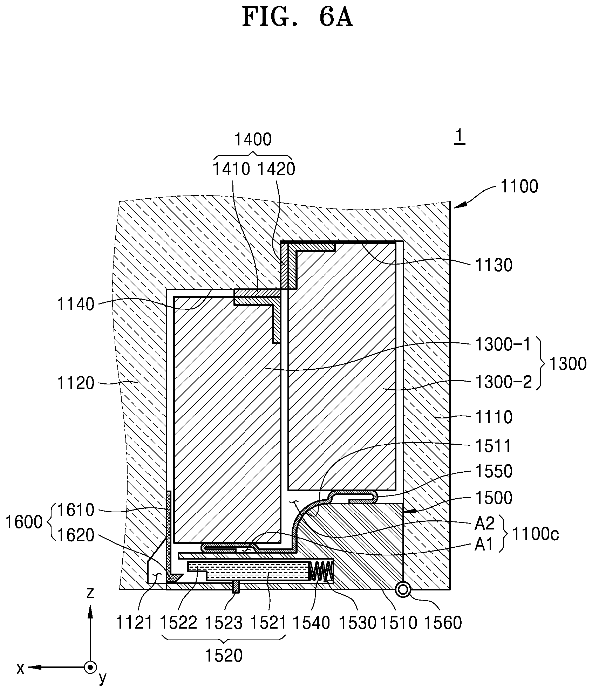

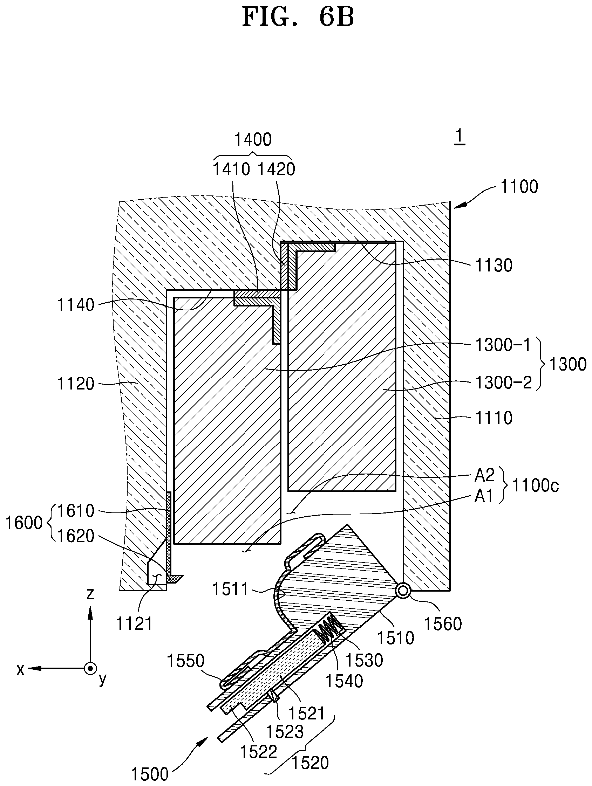

FIGS. 6A and 6B are cross-sectional views sequentially illustrating a process of separating a battery according to a user's operation in the aerosol generating device of FIG. 5A.

FIG. 6A shows a user moving the sliding member 1520 to decouple the same from the engaging member 1600.

Referring to FIG. 6A, the user may press the third portion 1523 of the sliding member 1520 protruding outwardly from the body 1100, in a direction in which the first elastic member 1540 is arranged. The sliding member 1520 may move in one direction (e.g., along the x-axis) along the rail 1530. The first elastic member 1540 connected to the first portion 1521 is compressed, and the first portion 1521 and the second portion 1522 of the sliding member 1520 may also move in one direction. Accordingly, the engaging portion 1620 of the engaging member 1600 may no longer come into contact with the second portion 1522 of the sliding member 1520.

FIG. 6B shows a state in which the cap 1500 is rotated around one end of the first extension portion 1110 so that the coupling space 1100c is opened.

Referring to FIG. 6B, since the engaging member 1600 no longer supports a portion of the cap 1500, the cap 1500 may open the coupling space 1100c. Unlike FIG. 5C, the shape of the engaging member 1600 of FIG. 6B is identical to that of the engaging member 1600 of FIG. 5A, and the coupling space 1100c may be opened by the user's manipulation regardless of the temperature change of the battery 1300.

Here, if the user wants to couple the cap 1500 to the engaging member 1600 so that the cap 1500 closes the coupling space 1100c again, the user may close the coupling space 1100c by rotating the cap 1500 while pressing the third portion 1523. When the user releases the pressure on the third portion 1523, the first elastic member 1540, which was compressed, applies an elastic force toward the first portion 1521, so that the sliding member 1520 may move along the rail 1530 toward the engaging portion 1620 of the engaging member 1600. The second portion 1522 of the sliding member 1520 may again come into contact with the engaging portion 1620 and be supported by the engaging portion 1620, and the cap 1500 may not be separated from the coupling space 1100c while closing the coupling space 1100c.

According to the aerosol generating device of the embodiments, a plurality of batteries are coupled to a body so as to supply power to internal components of the aerosol generating device for a long period of time and/or at high output.

In addition, according to the aerosol generating device of the embodiments, the size of a single battery may be miniaturized, while multiple batteries of the same specifications may be coupled to each other to ultimately secure a large-capacity power supply source.

In addition, according to the aerosol generating device according to the embodiments, problems that may occur due to overheating of the battery may be prevented in advance, so that the aerosol generating device may be used safely.

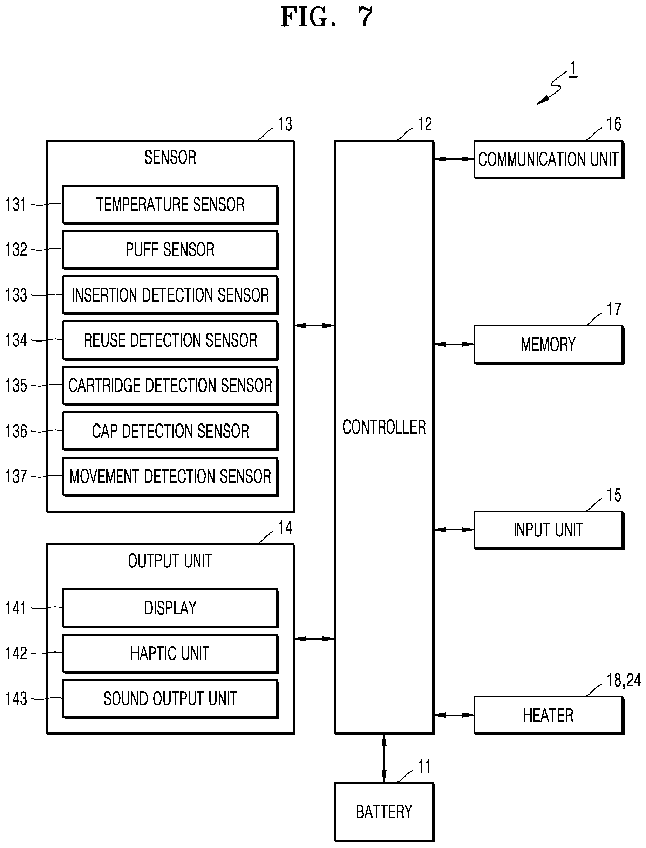

FIG. 7 is a block diagram of an aerosol generating device according to another embodiment of the present disclosure.

An aerosol generating device 1 may include a power source 11, a controller 12, a sensor 13, an output unit 14, an input unit 15, a communication unit 16, a memory 17, and one or more heaters 18 or 24. However, an internal structure of the aerosol generating device 1 is not limited to the illustration of FIG. 7. That is, it may be understood by those skilled in the art that some of the components shown in FIG. 7 may be omitted or new components may be added, according to the design of the aerosol generating device 1.

The sensor 13 may sense a state of the aerosol generating device 1 or a state of the surroundings of the aerosol generating device 1 and may transmit information corresponding to the sensed state to the controller 12. The controller 12 may control the aerosol generating device 1 so that various functions, such as operation control of the cartridge heater 24 and/or the heater 18, smoking restrictions, determination as to whether the stick S and/or the cartridge 19 is inserted, and an alarm display, may be performed, based on the information corresponding to the sensed state.

The sensor 13 may include at least one of a temperature sensor 131, a puff sensor 132, an insertion detection sensor 133, a reuse detection sensor 134, a cartridge detection sensor 135, a cap detection sensor 136, and a movement detection sensor 137.

The temperature sensor 131 may detect a temperature at which the cartridge heater 24 and/or the heater 18 is heated. The aerosol generating device 1 may include a separate temperature sensor for detecting the temperature of the cartridge heater 24 and/or the heater 18, or the cartridge heater 24 and/or the heater 18 may serve as a temperature sensor.

The temperature sensor 131 may output a signal corresponding to the cartridge heater 24 and/or the heater 18. For example, the temperature sensor 131 may include a resistor element of which resistance value changes according to a change in the temperature of the cartridge heater 24 and/or the heater 18. The temperature sensor 131 may be implemented by a thermistor, etc. which is an element using a property in which resistance changes according to a temperature. In this case, the temperature sensor 131 may output a signal corresponding to the resistance value of the resistor element as a signal corresponding to the temperature of the cartridge heater 24 and/or the heater 18. For example, the temperature sensor 131 may include a sensor for detecting the resistance value of the cartridge heater 24 and/or the heater 18. In this case, the temperature sensor 131 may output the signal corresponding to the resistance value of the cartridge heater 24 and/or the heater 18 as a signal corresponding to the temperature of the cartridge heater 24 and/or the heater 18.

The temperature sensor 131 may be disposed around the battery 11 to monitor a temperature of the battery 11. The temperature sensor 131 may be disposed adjacent to the battery 11. For example, the temperature sensor 131 may be attached to one surface of a power source, which is the battery 11. For example, the temperature sensor 131 may be mounted on one surface of a printed circuit board.

The temperature sensor 131 may be disposed inside the body 10 to detect an internal temperature of the body 10.

The puff sensor 132 may detect the user's puff, based on various physical changes in an airflow path. The puff sensor 132 may output a signal corresponding to the puff. For example, the puff sensor 132 may be a pressure sensor. The puff sensor 132 may output a signal corresponding to internal pressure of the aerosol generating device. The internal pressure of the aerosol generating device 1 may correspond to pressure of the airflow path on which gas flows. The puff sensor 132 may be disposed to correspond to the airflow path on which gas flows, in the aerosol generating device 1.

The insertion detection sensor 133 may detect insertion and/or removal of the stick S. The insertion detection sensor 133 may detect signal changes relating to insertion and/or removal of the stick S. The insertion detection sensor 133 may be installed around an insertion space. The insertion detection sensor 133 may detect insertion and/or removal of the stick S according to changes in dielectric constants inside the insertion space. For example, the insertion detection sensor 133 may be an inductive sensor and/or a capacitance sensor.

The inductive sensor may include at least one coil. The coil of the inductive sensor may be disposed adjacent to the insertion space. For example, when a magnetic field changes around a coil through which a current flows, the characteristics of the current flowing through the coil may be changed according to the Faraday's law. The characteristics of the current flowing through the coil may include a frequency of an alternating current, a current value, a voltage value, an inductance value, an impedance value, etc.

The inductive sensor may output signals corresponding to the characteristics of the current flowing through the coil. For example, the inductive sensor may output signals corresponding to the inductance value of the coil.

The capacitance sensor may include a conductor. The conductor of the capacitance sensor may be disposed adjacent to the insertion space. The capacitance sensor may output a signal corresponding to an electromagnetic characteristic of the surroundings, for example, an electrostatic capacitance around the conductor. For example, when the stick S including a wrapper made of a metal material is inserted into the insertion space, the electromagnetic properties around the conductor may be changed by the wrapper of the stick S.

The reuse detection sensor 134 may detect whether the stick S is reused. The reuse detection sensor 134 may be a color sensor. The color sensor may detect a color of the stick S. The color sensor may detect a color of a portion of the wrapper surrounding the outside of the stick S. The color sensor may detect values for optical characteristics corresponding to the color of an object, based on light reflected by the object. For example, the optical characteristics may be a wavelength of the light. The color sensor may be implemented as a single component with the proximity sensor, or may be implemented as a separate component distinct from the proximity sensor.

A color of at least a portion of the wrapper that constitutes the stick S may be changed by aerosol. In case where the stick S is inserted into the insertion space, the reuse detection sensor 134 may be disposed to correspond to a location in which at least a portion of the wrapper of which color is changed by aerosol. For example, before the stick S is used by the user, the color of at least the portion of the wrapper may be a first color. In this case, as at least a portion of the wrapper is wet by aerosol generated by the aerosol generating device 1 while the aerosol is passing through the stick S, the color of the at least a portion of the wrapper may be changed to a second color. The color of the at least a portion of the wrapper may be maintained as the second color after being changed from the first color to the second color.

The cartridge detection sensor 135 may detect insertion and/or removal of the cartridge 19. The cartridge detection sensor 135 may be implemented by an inductance-based sensor, a capacitive sensor, a resistance sensor, a hall sensor (hall IC) using a hall effect, etc.

The cap detection sensor 136 may detect mounting and/or removal of a cap. When the cap is separated from the body 10, a portion of the cartridge 19 and the body 10 covered by the cap may be exposed to the outside. The cap detection sensor 136 may be implemented by a contact sensor, a hall sensor (hall IC), an optical sensor, etc.

The movement detection sensor 137 may detect a movement of the aerosol generating device. The movement detection sensor 137 may be implemented with at least one of an acceleration sensor and a gyro sensor.

The sensor 13 may further include at least one of a humidity sensor, a barometric pressure sensor, a magnetic sensor, a global positioning sensor (GPS), and a proximity sensor, in addition to the above-described sensors 131 through 137. Functions of the sensors would be instinctively understood by one of ordinary skill in the art in view of their names and thus detailed descriptions thereof will be omitted herein.

The output unit (output interface) 14 may output information about the state of the aerosol generating device 1 and may provide the information to the user. The output unit 14 may include at least one of a display 141, a haptic unit 142, and a sound output unit 143, but embodiments are not limited thereto. When the display 141 forms a layer structure together with a touch pad to construct a touch screen, the display 141 may be used as an input device as well as an output device.

The display 141 may visually provide information about the aerosol generating device 1 to the user. For example, the information about the aerosol generating device 1 may refer to various pieces of information, such as the charging/discharging state of the battery 11 of the aerosol generating device 1, a preheating state of the heater 18, an insertion/removal state of the stick S and/or the cartridge 19, a mounting/removal state of the cap, or a state in which use of the aerosol generating device 1 is limited (e.g., detection of an abnormal article), and the display 141 may output the information to the outside. For example, the display 141 may have a shape of a light-emitting diode (LED). For example, the display 141 may be a liquid crystal display (LCD), an organic light-emitting display (OLED) panel, or the like.

The haptic unit 142 may convert an electrical signal into a mechanical stimulus or electrical stimulus and may tactually provide information about the aerosol generating device 1 to the user. For example, when initial power is supplied to the cartridge heater 24 and/or the heater 18 for a set time, the haptic unit 142 may generate vibration corresponding to completion of initial preheating. The haptic unit 142 may include a motor, a piezoelectric element, and/or an electrical stimulation device.

The sound output unit 143 may acoustically provide the information about the aerosol generating device 1 to the user. For example, the sound output unit 143 may convert the electrical signal into a sound signal and may output the sound signal to the outside.

The battery 11 may supply power used to operate the aerosol generating device 1. The battery 11 may supply power so that the cartridge heater 24 and/or the heater 18 may be heated. In addition, the battery 11 may supply power required for operations of the sensor 13, the output unit 14, the input unit 15, the communication unit 16, and the memory 17, which are other components provided in the aerosol generating device 1. The battery 11 may be a rechargeable power source or a disposable power source. For example, the battery 11 may be a lithium polymer (LiPoly) battery, but embodiments are not limited thereto.

The battery 11 may be a removable type (detachable or separable) power source. The battery 11 includes an electrical contact portion, and when the battery 11 is mounted in the aerosol-generating device 1, the electrical contact portion of the battery 11 may be implemented to be electrically connected to an electrical contact portion provided in the aerosol-generating device 1 to supply power to the aerosol-generating device 1. As another example, the battery 11 may include a charging coil for supplying power to the aerosol-generating device 1 in a wireless charging manner instead of a separate electrical contact portion. That is, the power supply method of the battery 11 may vary, and the electrical connection method of the battery 11 and the aerosol-generating device 1 may vary depending on the power supply method supported by the battery 11.

The detachable battery 11 may include a charger interface that may be connected to an external charger. Power for charging the detachable battery 11 may be provided to the battery 11 through the charger interface. The battery 11 may be charged by the external charger while being coupled to the aerosol-generating device 1 or while being separated from the aerosol-generating device 1.

Although not shown in FIG. 7, the aerosol generating device 1 may further include a battery protection circuit. The battery protection circuit may be electrically connected to the battery 11 and may include a switching element.

The battery protection circuit may cut off an electric path for the battery 11 according to certain conditions. For example, when a voltage level of the battery 11 is greater than or equal to a first voltage corresponding to overcharging, the battery protection circuit may cut off the electric path for the battery 11. For example, when a voltage level of the battery 11 is less than a second voltage corresponding to overdischarging, the battery protection circuit may cut off the electric path for the battery 11.

The heater 18 may heat a medium or an aerosol generating material in the stick S by receiving power from the battery 11. Although not shown in FIG. 7, the aerosol generating device 1 may further include a power conversion circuit (e.g., a DC/DC converter) for converting power of the battery 11 to supply the converted power to the cartridge heater 24 and/or the heater 18. In addition, when the aerosol generating device 1 generates aerosol by using an induction heating method, the aerosol generating device 1 may further include a DC/AC converter that converts direct current power of the battery 11 into alternating current power.

The controller 12, the sensor 13, the output unit 14, the input unit 15, the communication unit 16, and the memory 17 may perform functions by receiving power from the battery 11. Although not shown in FIG. 7, the aerosol generating device 1 may further include a power conversion circuit for converting the power of the battery 11 to supply the converted power to components, for example, a low dropout (LDO) circuit or a voltage regulator circuit. Although not shown in FIG. 7, a noise filter may be provided between the battery 11 and the heater 18. The noise filter may be a low pass filter. The low pass filter may include at least one inductor and a capacitor. A cutoff frequency of the low pass filter may correspond to a frequency of a radio frequency switching current applied from the battery 11 to the heater 18. Radio frequency noise components may be prevented from being applied to the sensor 13, such as the insertion detection sensor 133, by the low pass filter.

According to an embodiment, the cartridge heater 24 and/or the heater 18 may be formed of an arbitrary proper electric resistance material. For example, the proper electric resistance material may be metal or metal alloy including titanium, zirconium, tantalum, platinum, nickel, cobalt, chromium, hafnium, niobium, molybdenum, tungsten, tin, gallium, manganese, iron, copper, stainless steel, nichrome, etc., but embodiments are not limited thereto. Also, the heater 18 may be implemented using a metal heating wire, a metal heating plate on which an electric conductive track is disposed, a ceramic heating body, or the like, but embodiments are not limited thereto.

According to another embodiment, the heater 18 may be a heater using an induction heating method. For example, the heater 18 may include a susceptor that generates heat by a magnetic field applied by the coil and heats the aerosol generating material.

The input unit (input interface) 15 may receive information input from the user or may output the information to the user. For example, the input unit 15 may be a touch panel. The touch panel may include at least one touch sensor that detects touch. For example, the touch sensor may include a capacitive touch sensor, a resistive touch sensor, a surface acoustic wave touch sensor, an infrared touch sensor, or the like, but embodiments are not limited thereto.

The display 141 and the touch panel may be implemented as one panel. For example, the touch panel may be inserted (on-cell type or in-cell type) into the display 141. For example, the touch panel may be added on (add-on type) the display panel.

The input unit 15 may include a button, a key pad, a dome switch, a jog wheel, a jog switch, or the like, but embodiments are not limited thereto.

The memory 17 is hardware for storing various kinds of data processed in the aerosol generating device 1, and may store pieces of data that have been processed and are to be processed by the controller 12. The memory 17 may include at least one type of storage medium selected from among a flash memory type, a hard disk type, a multimedia card micro type, a card type memory (for example, a secure digital (SD) or extreme digital (XD) memory), a random access memory (RAM), a static random access memory (SRAM), a read-only memory (ROM), an electrically erasable programmable ROM (EEPROM), a programmable ROM (PROM), magnetic memory, a magnetic disk, and an optical disk. The memory 17 may store data about the operating time of the aerosol generating device 1, a maximum number of puffs, a current number of puffs, at least one temperature profile, and the user's smoking pattern.

The communication unit (communication interface, communicator) 16 may include at least one component for communication with other electronic devices. For example, the communication unit 16 may include at least one of a short-range wireless communication unit and a wireless communication unit.

Examples of the short-range wireless communication unit may include, but are not limited to, a Bluetooth communication unit, a Bluetooth Low Energy (BLE) communication unit, a near field communication (NFC) unit, a wireless local area network (WLAN) (e.g., Wi-Fi) communication unit, a ZigBee communication unit, an infrared Data Association (IrDA) communication unit, a Wi-Fi direct (WFD) communication unit, an ultra wideband (UWB) communication unit, and an Ant+ communication unit.

The wireless communication unit may include a cellular network communication unit, an Internet communication unit, a computer network (e.g., a LAN or a WAN) communication unit, or the like, but embodiments are not limited thereto.

Although not shown in FIG. 7, the aerosol generating device 1 may further include a connection interface, such as a universal serial bus (USB) interface, and may transmit/receive information by being connected to another external device through the connection interface, such as a USB interface, or may charge the battery 11.

The controller 12 may control overall operations of the aerosol generating device 1. According to an embodiment, the controller 12 may include at least one processor. The processor may be implemented by an array of a plurality of logic gates, or may be implemented by a combination of a general-use microprocessor and a memory in which a program executable by the general-use microprocessor is stored. It will also be understood by one of ordinary skill in the art to which the present embodiment pertains that the processor may be implemented by other types of hardware.

The controller 12 may control supplying of the power of the battery 11 to the heater 18, thereby controlling the temperature of the heater 18. The controller 12 may control the temperature of the cartridge heater 24 and/or the heater 18, based on the temperature of the cartridge heater 24 and/or the heater 18 sensed by the temperature sensor 131. The controller 12 may control power supplied to the cartridge heater 24 and/or the heater 18, based on the temperature of the cartridge heater 24 and/or the heater 18. For example, the controller 12 may determine a target temperature of the cartridge heater 24 and/or the heater 18, based on a temperature profile stored in the memory 17.

The aerosol generating device 1 may include a power supply circuit (not shown) electrically connected to the battery 11 between the battery 11 and the cartridge heater 24 and/or the heater 18. The power supply circuit may be electrically connected to the cartridge heater 24, the heater 18, or an induction coil 181. The power supply circuit may include at least one switching element. The switching element may be implemented by a bipolar junction transistor (BJT), a field effect transistor (FET), or the like. The controller 12 may control the power supply circuit.

The controller 12 may control switching of the switching element of the power supply circuit, thereby controlling the supply of power. The power supply circuit may be an inverter that converts direct current power output by the battery 11 into alternating current power. For example, the inverter may include a full-bridge circuit or half-bridge circuit including a plurality of switching elements.

The controller 12 may turn on the switching element so that power may be supplied from the battery 11 to the cartridge heater 24 and/or the heater 18. The controller 12 may turn off the switching element so that the supply of power to the cartridge heater 24 and/or the heater 18 may be cut off. The controller 12 may adjust a current supplied by the battery 11 by adjusting a frequency and/or duty ratio of a current pulse input to the switching element.

The controller 12 may control a voltage output by the battery 11 by controlling switching of the switching element of the power supply circuit. The power conversion circuit may convert the voltage output by the battery 11. For example, the power conversion circuit may include a Buck-converter that drops the voltage output by the battery 11. For example, the power conversion circuit may be implemented through a Buck-boost converter, a Zener diode, etc.

The controller 12 may adjust the level of the voltage output by the power conversion circuit by controlling an on/off operation of the switching element included in the power conversion circuit. When an on state of the switching element is continued, the level of the voltage output by the power conversion circuit may correspond to the level of the voltage output by the battery 11. A duty ratio with respect to the on/off operation of the switching element may correspond to a ratio of the voltage output by the power conversion circuit to the voltage output by the battery 11. As the duty ratio with respect to the on/off operation of the switching element is decreased, the level of the voltage output by the power conversion circuit may be reduced. The heater 18 may be heated based on the voltage output by the power conversion circuit.

The controller 12 may control power to be supplied to the heater 18, by using at least one method of a pulse width modulation (PWM) method and a proportional-integral-differential (PID) method.

For example, the controller 12 may control supply of a current pulse having a certain frequency and a duty ratio, by using the PWM method. The controller 12 may control power supplied to the heater 18 by adjusting the frequency and duty ratio of the current pulse.

For example, the controller 12 may determine a target temperature that is a target of control, based on the temperature profile. The controller 12 may control the power supplied to the heater 18 by using a PID method, which is a feedback control method using a difference value between the temperature of the heater 18 and the target temperature thereof, a value obtained by integrating the difference value according to the flow of time, and a value obtained by differentiating the difference value according to the flow of time.

The controller 12 may prevent the cartridge heater 24 and/or the heater 18 from being overheated. For example, the controller 12 may control an operation of the power conversion circuit so that the supply of the power to the cartridge heater 24 and/or the heater 18 is stopped, based on the temperature of the cartridge heater 24 and/or the heater 18 exceeding a preset limit temperature. For example, the controller 12 may reduce the amount of power supplied to the cartridge heater 24 and/or the heater 18, based on the temperature of the cartridge heater 24 and/or the heater 18 exceeding the preset limit temperature. For example, the controller 12 may determine that the aerosol generating material accommodated in the cartridge 19 is exhausted, based on the temperature of the cartridge heater 24 exceeding the limit temperature, and may cut off the supply of power to the cartridge heater 24.

The controller 12 may control charging/discharging of the battery 11. The controller 12 may check the temperature of the battery 11, based on an output signal of the temperature sensor 131.

When a power wire is connected to a battery terminal of the aerosol generating device 1, the controller 12 may check whether the temperature of the battery 11 is greater than or equal to a first limit temperature that is a basis for blocking charging of the battery 11. When the temperature of the battery 11 is less than the first limit temperature, the controller 12 may control the battery 11 to be charged, based on a preset charging current. When the temperature of the battery 11 is equal to or greater than the first limit temperature, the controller 12 may block charging of the battery 11.

When power of the aerosol generating device 1 is in an on state, the controller 12 may check whether the temperature of the battery 11 is greater than or equal to a second limit temperature that is a basis for cutting off discharging of the battery 11. When the temperature of the battery 11 is less than the second limit temperature, the controller 12 may control the power stored in the battery 11 to be used. When the temperature of the battery 11 is greater than or equal to the second limit temperature, the controller 12 may stop using the power stored in the battery 11.

The controller 12 may calculate the remaining capacity of the power stored in the battery 11. For example, the controller 12 may calculate the remaining capacity of the battery 11, based on a voltage and/or current sensing value of the battery 11.

The controller 12 may determine whether the stick S is inserted into the insertion space, through the insertion detection sensor 133. The controller 12 may determine that the stick S is inserted, based on an output signal of the insertion detection sensor 133. When it is determined that the stick S is inserted into the insertion space, the controller 12 may control power to be supplied to the cartridge heater 24 and/or the heater 18. For example, the controller 12 may supply power to the cartridge heater 24 and/or the heater 18, based on the temperature profile stored in the memory 17.

The controller 12 may determine whether the stick S is removed from the insertion space. For example, the controller 12 may determine whether the stick S is removed from the insertion space, through the insertion detection sensor 133. For example, when the temperature of the heater 18 is greater than or equal to the limit temperature or when a temperature change slope of the heater 18 is equal to or greater than a set slope, the controller 12 may determine that the stick S is removed from the insertion space. When it is determined that the stick S has been removed from the insertion space, the controller 12 may block supply of power to the cartridge heater 24 and/or the heater 18.

The controller 12 may control a power supply time and/or a power supply amount for the heater 18 according to the state of the stick S detected by the sensor 13. The controller 12 may check a level range in which the level of a signal of a capacitance sensor is included, based on a lookup table. The controller 12 may check a moisture amount for the stick S according to the checked level range.

When the stick S is in an overwatering state, the controller 12 may control the power supply time for the heater 18 to thereby increase the preheating time of the stick S rather than when the stick S is in a general state.

The controller 12 may determine whether the stick S inserted into the insertion space is reused, through the reuse detection sensor 134. For example, the controller 12 may compare a sensing value of a signal of the reuse detection sensor with a first reference range in which a first color is included, and may determine that the stick S is not used when the sensing value is included in the first reference range. For example, the controller 12 may compare the sensing value of the signal of the reuse detection sensor with a second reference range in which a second color is included, and may determine that the stick S is used when the sensing value is included in the second reference range. When it is determined that the stick S is used, the controller 12 may block supply of power to the cartridge heater 24 and/or the heater 18.

The controller 12 may determine whether the cartridge 19 is combined and/or removed, through the cartridge detection sensor 135. For example, the controller 12 may determine whether the cartridge 19 is combined or removed, based on the sensing value of a signal of the cartridge detection sensor.

The controller 12 may determine whether the aerosol generating material of the cartridge 19 is exhausted. For example, the controller 12 may preheat the cartridge heater 24 and/or the heater 18 by applying power, may determine whether the temperature of the cartridge heater 24 exceeds the limit temperature in a preheating section, and, when the temperature of the cartridge heater 24 exceeds the limit temperature, may determine that the aerosol generating material of the cartridge 19 is exhausted. When it is determined that the aerosol generating material of the cartridge 19 is exhausted, the controller 12 may cut off the supply of power to the cartridge heater 24 and/or the heater 18.

The controller 12 may determine whether use of the cartridge 19 is possible. For example, the controller 12 may determine that the use of the cartridge 19 is not possible if a current puff frequency is greater than or equal to a maximum puff frequency set in the cartridge 19, based on data stored in the memory 17. For example, when a total time period during which the heater 24 is heated is greater than or equal to a preset maximum time period or a total amount of power supplied to the cartridge heater 24 is greater than or equal to a preset maximum power amount, the controller 12 may determine that the use of the cartridge 19 is not possible.

The controller 12 may perform determination on the user's inhaling through the puff sensor 132. For example, the controller 12 may determine whether a puff occurs, based on a sensing value of a signal of the puff sensor. For example, the controller 12 may determine the intensity of the puff, based on the sensing value of the signal of the puff sensor 132. When the puff frequency reaches the preset maximum puff frequency or puffs are not sensed for a preset time period or more, the controller 12 may cut off the supply of power to the cartridge heater 24 and/or the heater 18.

The controller 12 may determine whether the cap is combined and/or removed, through the cap detection sensor 136. For example, the controller 12 may determine whether the cap is combined or removed, based on a sensing value of a signal of the cartridge detection sensor.

The controller 12 may control the output unit 14, based on a result of the sensing performed by the sensor 13 For example, when the number of puffs counted by the puff sensor 132 reaches a preset number, the controller 12 may notify the user in advance that the aerosol generating device 1 is ended soon, through at least one of the display 141, the haptic unit 142, and the sound output unit 143. For example, the controller 12 may notify the user through the output unit 14, based on a determination that the stick S is not present in the insertion space. For example, the controller 12 may notify the user through the output unit 14, based on a determination that the cartridge 19 and/or the cap is not mounted. For example, the controller 12 may transmit information about the temperature of the cartridge heater 24 and/or the heater 18 to the user through the output unit 14.

The controller 12 may store and update a history of an event occurred in the memory 17, based on certain event occurrence. The event may include insertion detection of the stick S, heating start of the stick S, puff detection, puff end, overheat detection of the cartridge heater 24 and/or the heater 18, detection of overvoltage application to the cartridge heater 24 and/or the heater 18, heating end of the stick S, an operation such as power on/off of the aerosol generating device 1, charging start of the battery 11, detection of overcharging of the battery 11, and charging end of the battery 11, which are performed by the aerosol generating device 1. The history of the event may include, for example, a date and time of the event, log data corresponding to the event. For example, when a predetermined event is insertion detection of the stick S, log data corresponding to the event may include data for the sensing value, etc. of the insertion detection sensor 133. For example, when the predetermined event is overheating detection of the cartridge heater 24 and/or the heater 18, the log data corresponding to the event may include data about, for example, the temperature of the cartridge heater 24 and/or heater 18, the voltage applied to the cartridge heater 24 and/or the heater 18, and a current flowing through the cartridge heater 24 and/or the heater 18.

The controller 12 may control a communication link to be formed with an external device, such as the user's mobile terminal. When receiving data on authentication from an external device through the communication link, the controller 12 may remove limitation of the use of at least one function of the aerosol generating device 1. The data on authentication may include data indicating completion of user authentication with respect to a user corresponding to the external device. The user may perform user authentication through the external device. The external device may determine whether user data is valid, based on the user's birthday and a unique number representing the user, and may receive data about use authority of the aerosol generating device 1 from an external server. The external device may transmit data indicating the completion of the user authentication to the aerosol generating device 1, based on the data about the use authority. When the user authentication is completed, the controller 12 may remove limitation of the use of the at least one function of the aerosol generating device 1. For example, when the user authentication is completed, the controller 12 may_remove the limitation of the use of a heating function of supplying power to the heater 18.

The controller 12 may transmit data on the state of the aerosol generating device 1 to the external device through the communication link formed with the external device. Based on the received state data, the external device may output the remaining capacity, the operation mode, etc. of the battery 11 of the aerosol generating device 1 through a display of the external device.

The external device may transmit a position search request to the aerosol generating device 1, based on an input of starting a position search of the aerosol generating device 1. When receiving a position search request from the external device, the controller 12 may control at least one of output devices to perform an operation corresponding to a position search, based on the received position search request. For example, the haptic unit 142 may generate vibration in response to the position search request. For example, in response to the position search request, the display 141 may output an object that corresponds to position search and search end.

The controller 12 may control firmware update to be performed, when receiving firmware data from the external device. The external device may check a current version of the firmware of the aerosol generating device 1 and determine whether a new version of the firmware is present. When receiving an input of requesting for firmware download, the external device may receive the new version of the firmware data and transmit the new version of the firmware data to the aerosol generating device 1. As the controller 12 receives the new version of the firmware data, the controller 12 may control the firmware update of the aerosol generating device 1 to be performed.

The controller 12 may transmit data on a sensing value of the at least one sensor 13 to an external server (not shown) through the communication unit 16, and may receive and store a learning model generated by learning sensing values from a server through machine learning, such as deep learning. The controller 12 may perform, for example, an operation of determining the user's inhaling pattern and an operation of generating a temperature profile, by using the learning model received from the server. The controller 12 may store, for example, sensing value data of the at least one sensor 13 and data for training an artificial neural network (ANN) in the memory 17. For example, the memory 17 may store a database for each component provided in the aerosol generating device 1, a weight that forms an ANN structure, and biases, which are for training the ANN. The controller 12 may learn data on a sensing value of at least one sensor 13, the user's inhaling pattern, the temperature profile, etc. stored in the memory 17, and may generate at least one learning model used for, for example, determination of the user's inhaling pattern, generation of the temperature profile.

Any or all of the embodiments of the present disclosure described above are neither exclusive nor distinct from each other. Any or all of the embodiments of the present disclosure described above may be combined or used in combination with each other in their respective configurations or functions.

For example, a component A described in a particular embodiment and/or drawing may be combined with a component B described in another embodiment and/or drawing. In other words, even when the coupling between components is not directly described, it means that the coupling is possible, except in cases where coupling is described as impossible.

The detailed descriptions given above should not be construed as limiting in any respect and should be considered illustrative only. The scope of the present disclosure should be determined by a reasonable interpretation of the appended claims, and all changes coming within the equivalent scope of the present disclosure are intended to be included within the scope of the present disclosure.

## Claims

1. An aerosol generating device comprising:
a body comprising an accommodation space for accommodating an aerosol generating article;
a heater for heating the aerosol generating article accommodated in the accommodation space;
a plurality of batteries which are detachably coupled to the body and include an L-shaped supply terminal for supplying power to the interior of the body; and
a plurality of receiving terminals for receiving power by contacting the supply terminal in different directions,
wherein the body comprises:
a first extension portion and a second extension portion extending in a first direction while facing each other;
a first base portion extending in a second direction crossing the first direction so as to cross the first extension portion and the second extension portion; and
a second base portion protruding from the first base portion in the first direction so as to be connected to the second extension portion, and having the plurality of receiving terminals arranged therein.

2. The aerosol generating device of claim 1, wherein
the plurality of receiving terminals include a first receiving terminal protruding from a bottom surface of the second base portion in the first direction and a second receiving terminal protruding from a side surface of the second base portion in the second direction.

3. The aerosol generating device of claim 1, wherein
a shape of the plurality of receiving terminals changes between a first shape which is a protruding shape and a second shape which is a shape flattened by being pressurized by the plurality of batteries.

4. The aerosol generating device of claim 1, wherein
the supply terminal comprises a first portion arranged to face the first direction and a second portion arranged to face the second direction.

5. The aerosol generating device of claim 4, wherein
the first portion and the second portion of the supply terminal cross each other at one edge of the plurality of batteries.

6. The aerosol generating device of claim 4, wherein
the plurality of batteries include a first battery in contact with one of the plurality of receiving terminals, through the first portion, and a second battery in contact with another one of the plurality of receiving terminals, through the second portion.

7. The aerosol generating device of claim 6, wherein
the first battery extends in the first direction from a bottom surface of the second base portion, and the second battery extends in the first direction from a bottom surface of the first base portion.

8. The aerosol generating device of claim 4, wherein
one of the plurality of batteries further comprises a connection terminal facing in an opposite direction to the first portion of the supply terminal and contacting the first portion of another one of the plurality of batteries, and an extension terminal connecting the supply terminal to the connection terminal.

9. The aerosol generating device of claim 8, wherein
the extension terminal wraps around an outer surface of the plurality of batteries and extends in the first direction.

10. The aerosol generating device of claim 1, wherein
the body comprises:
a coupling space surrounded by the first extension portion, the second extension portion, the first base portion, and the second base portion, and including a first area positioned in the first direction from the second base portion and a second area positioned in the first direction from the first base portion; and
a partition separating the first area and the second area.

11. The aerosol generating device of claim 10, further comprising
a cap protruding toward the second area and closing the coupling space.

12. The aerosol generating device of claim 11, wherein
the cap comprises:
a sliding member that slides in one direction within the cap;
a rail guiding movement of the sliding member; and
an elastic member arranged on an inner portion of the rail and connected to the sliding member.

13. The aerosol generating device of claim 12, wherein
the sliding member comprises a first portion connected to the elastic member, a second portion protruding in the one direction from the first portion, and a third portion extending in a direction crossing the one direction from the first portion and protruding outward from the body.

14. The aerosol generating device of claim 12, further comprising
an engaging member that contacts a portion of the cap and prevents separation of the cap from the body,
wherein the engaging member comprises a shape memory alloy that changes its shape in response to a temperature change of the battery.

15. The aerosol generating device of claim 14, wherein
the body further includes an accommodation recess for accommodating the engaging member,
wherein a shape of the engaging member changes in a direction away from the sliding member in response to a temperature change of the battery.
